# EUROPÄISCHE PATENTSCHRIFT

(11) **EP 3 263 317 B1**
(45) Veröffentlichungstag und Bekanntmachung des Hinweises auf die Patenterteilung: **02.09.2020**
(21) Anmeldenummer: 17177350.0
(22) Anmeldetag: 22.06.2017
(51) Int. Cl.: B29C 64/393, B22F 3/105

(54) **VORRICHTUNG UND VERFAHREN ZUR BESTRAHLUNGSSTEUERUNG IN EINER VORRICHTUNG ZUM HERSTELLEN EINES DREIDIMENSIONALEN OBJEKTS**
DEVICE AND METHOD FOR IRRADIATION CONTROL IN A DEVICE FOR PRODUCING A THREE-DIMENSIONAL OBJECT
DISPOSITIF ET PROCÉDÉ DE COMMANDE DE RAYONNEMENT DANS UN DISPOSITIF DE FABRICATION D'UN OBJET TRIDIMENSIONNEL

(30) Priorität: 01.07.2016 DE 102016212063
(43) Veröffentlichungstag der Anmeldung: 03.01.2018
(73) Patentinhaber: EOS GmbH Electro Optical Systems, 82152 Krailling (DE)
(72) Erfinder: DOMRÖSE, Robert Achim, 82110 Germering (DE); FROHNMAIER, Markus, 94491 Hengersberg (DE); GÖTH, Michael, 81677 München (DE); FRÖBE, Stefan, 80339 München (DE); WICHNER, Joachim, 81241 München (DE); HÄGER, Harald, 81245 München (DE)
(74) Vertreter: Prüfer & Partner mbB Patentanwälte · Rechtsanwälte

(56) Entgegenhaltungen:
- WO-A1-2008/116518
- WO-A1-2015/071183
- DE-A1-102013 212 803
- DE-A1-102014 215 213

## Beschreibung

Die vorliegende Erfindung bezieht sich auf eine Bestrahlungssteuervorrichtung und ein Bestrahlungssteuerungsverfahren im Rahmen des Herstellens zumindest eines dreidimensionalen Objekts durch schichtweises Aufbringen und selektives Verfestigen eines Aufbaumaterials, sowie auf eine Vorrichtung und ein Verfahren zum schichtweisen Herstellen zumindest eines dreidimensionalen Objekts.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt. Dabei werden die Pulverkörner an diesen Stellen durch die durch die Strahlung eingebrachte Energie teilweise oder vollständig aufgeschmolzen, so dass sie nach einer Abkühlung miteinander verbunden als Festkörper vorliegen.

Das dabei durch den Energieeintrag entstehende Schmelzbad kann, wie beispielsweise in der Druckschrift US 2013/0168902 A1 beschrieben, durch einen Detektor erfasst werden. Das gemessene und ausgewertete Schmelzbadsignal korreliert mit der im realen Bauteil resultierenden Qualität. Zur Evaluierung der Bauteilqualität werden die erfassten Sensorwerte zusammen mit den die Sensorwerte im Bauteil lokalisierenden Koordinatenwerten abgespeichert und mittels einer Visualisierungseinrichtung bezogen auf ihren Erfassungsort im Bauteil dargestellt.

Aus der Druckschrift DE 10 2013 212 803 A1 ist es weiterhin bekannt, einen zu verfestigenden Objektquerschnitt in verschiedene Modell-Teilbereiche zu zerlegen, wobei das Aufbaumaterial in den zumindest zwei verschiedenen Modell-Teilbereichen in voneinander unterschiedlicher Weise verfestigt wird. Die Modell-Teilbereiche können dabei beispielsweise ein Kontur- und ein Innenbereich des Objektquerschnitts sein. Des Weiteren kann ein Modell-Teilbereich auch eine nach unten weisende Außen- oder Innenfläche des Objekts sein.

Ferner ist beispielsweise aus der WO 97/14549 das Herstellen eines Stützbereichs um das Objekt herum bekannt. Auch hier ist vorgesehen, Teilbereiche des Stützbereichs mit unterschiedlichen Eigenschaften durch Verfestigen des Aufbaumaterials auf verschiedene Weise zu erzeugen. Aus der wo 2015/071183 ist eine Lasersintervorrichtung welche eine Steuereinheit über die die einzelnen Bestandteile der Vorrichtung zum Durchführen des Bauprozesses gesteuert werden, umfasst.

Werden verschiedene Teilbereiche der Objektquerschnitte unter Verwendung verschiedener Belichtungstypen verfestigt, so können auch die durch Auftreffen der Strahlung auf das zu verfestigende Aufbaumaterial entstehenden Schmelzbereiche unterschiedliche Eigenschaften haben, was in unterschiedlichen Schmelzbadsignalen resultieren kann. Wird der Belichtungstyp bei der Auswertung des Schmelzbadsignals nicht berücksichtigt, so kann dies zu einer falschen Klassifikation von Bauteileigenschaften und/oder einer Bauteilqualität führen.

Die Aufgabe der vorliegenden Erfindung besteht darin, eine alternative bzw. verbesserte Vorrichtung bzw. ein alternatives bzw. verbessertes Verfahren zur Ermittlung der Bauteilqualität bereit zu stellen.

Diese Aufgabe wird gelöst durch eine Bestrahlungssteuervorrichtung gemäß Anspruch 1, eine Schichtbauvorrichtung gemäß Anspruch 8, ein Bestrahlungssteuerungsverfahren gemäß Anspruch 14 und ein generatives Schichtbauverfahren gemäß Anspruch 15. Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt, bzw. die Merkmale der Vorrichtungen können auch jeweils untereinander zur Weiterbildung genutzt werden.

Die erfindungsgemäße Bestrahlungssteuervorrichtung dient zur Aus- und/oder Nachrüstung einer generativen Schichtbauvorrichtung zur Herstellung mindestens eines dreidimensionalen Objektes aus einem Aufbaumaterial Schicht für Schicht durch Verfestigung des Aufbaumaterials mittels Wärmezufuhr zu dem Querschnitt eines Objekts in einer Schicht entsprechenden Stellen, indem die Schicht selektiv mit elektromagnetischer Strahlung oder Teilchenstrahlung abgetastet wird. Die generative Schichtbauvorrichtung weist eine Bestrahlungsvorrichtung auf, die elektromagnetische Strahlung oder Teilchenstrahlung emittiert und in der Lage ist, in einer Schicht zu verfestigende Stellen so zu bestrahlen, dass sie nach Abkühlung als Objektquerschnitt oder Teil des Objektquerschnitts in der jeweiligen Schicht vorliegen. Die Bestrahlungssteuervorrichtung weist eine erste Datenausgabeschnittstelle auf, an der Steuerbefehle an die Bestrahlungsvorrichtung ausgegeben werden können, damit diese entsprechend den Steuerbefehlen Stellen einer Schicht des Aufbaumaterials mit elektromagnetischer Strahlung oder Teilchenstrahlung abtastet. Die Steuerbefehle, die über die erste Datenausgabeschnittstelle ausgeben werden, spezifizieren einen aus einer Mehrzahl von Bestrahlungstypen, wobei ein Bestrahlungstyp definiert ist durch eine vorgegebene Kombination aus einer von der Bestrahlungsvorrichtung zu emittierenden Strahlungsenergiedichte und einem Abtastmuster, mit dem die Strahlung auf einen Bereich einer Schicht des Aufbaumaterials gerichtet wird. Weiter weist die Bestrahlungssteuervorrichtung eine zweite Datenausgabeschnittstelle auf, an der ein Bestrahlungstyp in Echtzeit im Verhältnis zu einem zeitlichen Ablauf der Ausgabe eines diesen Bestrahlungstyp spezifizierenden Steuerbefehls ausgegeben werden kann.

Unter der Ausgabe eines Bestrahlungstyps in Echtzeit im Verhältnis zu einem zeitlichen Ablauf der Ausgabe des entsprechenden Steuerungsbefehles ist zu verstehen, dass die Ausgabe des Bestrahlungstyps innerhalb einer vorgegebenen Zeitspanne vor oder nach der Ausgabe des zugehörigen Steuerbefehls erfolgt. Die Ausgabe des Steuerbefehls und des Bestrahlungstyps können dabei insbesondere zu vorherbestimmten Zeitpunkten anfallen, d.h. wenn ein Steuerbefehl zur Bestrahlung eines nächsten (Teil-) Bereichs einer Schicht ausgegeben wird.

Dadurch ist es beispielsweise möglich, den zur Bestrahlung eines Bereichs des Objektquerschnitts in der jeweiligen Schicht verwendeten Bestrahlungstyp innerhalb eines begrenzten, insbesondere genau definierten bzw. definierbaren, Zeitversatzes zu dem ausgegebenen Steuerbefehl bereitzustellen. Dies erlaubt beispielsweise das Speichern und/oder Auswerten eines Schmelzbadsignals in Verbindung mit dem Bestrahlungstyp, mit welchem der Energiestrahl das Schmelzbad erzeugt. Das Schmelzbadsignal kann dann in Korrelation zu einer im Bauteil resultierenden Qualität und/oder einer weiteren Bauteileigenschaft gesetzt werden. Die Bereitstellung der Information über den entsprechenden Bestrahlungstyp kann dabei beispielsweise helfen, das Schmelzbadsignal korrekt auszuwerten und somit die richtigen Rückschlüsse auf die Bauteilqualität und/oder weitere Bauteileigenschaften zu erzielen.

Vorzugsweise kann die Bestrahlungssteuervorrichtung die Daten an der ersten und der zweiten Datenausgabeschnittstelle zeitgleich ausgeben. Dadurch können beispielsweise die Ausgabe eines Steuerbefehls und die Ausgabe einer Information über den verwendeten Bestrahlungstyp mit minimalem Zeitversatz erfolgen.

Alternativ dazu liegt im Betrieb der Bestrahlungssteuervorrichtung der Zeitversatz zwischen der Ausgabe eines Bestrahlungstyps über die zweite Datenausgabeschnittstelle und der Ausgabe eines diesen Bestrahlungstyp spezifizierenden Steuerbefehls über die erste Datenausgabeschnittstelle stets unterhalb von 5 ms, bevorzugt 4 ms, besonders bevorzugt 3 ms. Dadurch ist es beispielsweise möglich, den Zeitversatz zwischen den Ausgaben klein zu halten um eine gute Zuordnung beispielsweise eines ermittelten Schmelzbadsignal mit dem entsprechenden Bestrahlungstyp des Energiestrahls zu erhalten.

Vorzugsweise weist die Bestrahlungssteuervorrichtung weiter einen Puffer zur Speicherung von über die erste Datenausgabeschnittstelle auszugebenden Steuerbefehlen auf. So können beispielsweise die an die Bestrahlungsvorrichtung auszugebenden Steuerbefehle zwischengespeichert werden und die Bestrahlungssteuervorrichtung kann ohne Zeitverzögerung auf einen auszugebenden Steuerbefehl zugreifen. Dadurch kann beispielsweise verhindert werden, dass Zeitverzögerungen im Bauvorgang durch verzögert ausgegebene Steuerbefehle auftreten.

Vorzugsweise werden bei der Bestrahlungssteuervorrichtung mit der Ausgabe eines die Koordinaten eines mit der Bestrahlungsvorrichtung zu bestrahlenden Ortes auf der Aufbaumaterialschicht spezifizierenden Steuerbefehls über die erste Datenausgabeschnittstelle diese Koordinaten zeitlich koordiniert über die zweite Datenausgabeschnittstelle ausgegeben. Durch die Bereitstellung der Koordinaten können beispielsweise ein erfasstes Schmelzbadsignal und/oder ein Bestrahlungstyp dem entsprechenden Erfassungsort im Bauteil zugeordnet werden.

Vorzugsweise liegt der Zeitversatz zwischen der Ausgabe der Koordinaten über die zweite Datenausgabeschnittstelle und der Ausgabe eines die Koordinaten eines mit der Bestrahlungsvorrichtung zu bestrahlenden Ortes auf der Aufbaumaterialschicht spezifizierenden Steuerbefehls über die erste Datenausgabeschnittstelle stets unterhalb von 5 ms, bevorzugt 4 ms, besonders bevorzugt 3 ms. Dadurch ist es beispielsweise möglich, den Zeitversatz zwischen den Ausgaben klein zu halten um eine gute Zuordnung beispielsweise eines ermittelten Schmelzbadsignal und/oder des Bestrahlungstyps des Energiestrahls mit dem Erfassungsort im Bauteil zu erhalten.

Vorzugsweise emittiert die Bestrahlungsvorrichtung mindestens einen Strahl mit einem (vorab oder dynamisch) definierten Durchmesser und/oder einer (vorab oder dynamisch) definierten Durchmesser Gestalt des Strahlquerschnitts und/oder einem (vorab oder dynamisch) definierten Intensitätsprofil und die Bestrahlungstypen spezifizieren desweiteren den Durchmesser und/oder die Gestalt des Strahlquerschnitts und/oder das Intensitätsprofil. Dadurch können beispielsweise weitere, unterschiedliche Bestrahlungstypen realisiert werden.

Eine generative Schichtbauvorrichtung zur Herstellung mindestens eines dreidimensionalen Objektes aus einem Aufbaumaterial Schicht für Schicht durch Verfestigung des Aufbaumaterials mittels Wärmezufuhr zu dem Querschnitt eines Objekts in einer Schicht entsprechenden Stellen, indem die Schicht selektiv mit elektromagnetischer Strahlung oder Teilchenstrahlung abgetastet wird, weist eine oben beschriebene erfindungsgemäße Bestrahlungssteuervorrichtung auf. Des Weiteren weist die generative Schichtbauvorrichtung eine Auftragsvorrichtung zum Aufbringen einer Schicht des Aufbaumaterials auf die Oberfläche einer Bauunterlage oder eine bereits vorhandene Schicht auf, eine Bestrahlungsvorrichtung, die elektromagnetische Strahlung oder Teilchenstrahlung emittiert und in der Lage ist, in einer Schicht zu verfestigenden Stellen so zu bestrahlen, dass sie nach Abkühlung als Objektquerschnitt oder Teil des Objektquerschnitts in der jeweiligen Schicht vorliegen, sowie eine Steuereinrichtung, welche die Auftragsvorrichtung und die Bestrahlungsvorrichtung so steuert, dass ein Auftragsschritt und ein Verfestigungsschritt nacheinander so oft wiederholt werden, bis alle Querschnitte des mindestens einen herzustellenden dreidimensionalen Objekts verfestigt sind. Damit lassen sich die oben für die Bestrahlungssteuervorrichtung aufgeführten Wirkungen in einer Vorrichtung zum Herstellen eines dreidimensionalen Objekts, die die Bestrahlungssteuervorrichtung umfasst, erzielen.

Vorzugsweise ist die generative Schichtbauvorrichtung so ausgelegt, dass die Steuereinrichtung an die Bestrahlungssteuervorrichtung die von letzterer an die Bestrahlungsvorrichtung ausgegebenen Steuerbefehle übermittelt. Damit kann beispielsweise eine zentrale Bereitstellungseinheit für die zu übermittelnden Steuerbefehle realisiert werden.

Die generative Schichtbauvorrichtung umfasst bevorzugt weiterhin eine Prozessüberwachungsvorrichtung, die mit der zweiten Datenausgabeschnittstelle verbunden ist. Mit der Prozessüberwachungsvorrichtung können beispielsweise Prozessdaten ermittelt und/oder ausgewertet werden. Ferner können durch die Verknüpfung mit der zweiten Datenausgabeschnittstelle die Prozessdaten beispielsweise einem Belichtungstyp und/oder ihrem Erfassungsort im Bauteil zugeordnet werden.

Vorzugsweise ist die Prozessüberwachungsvorrichtung in der Lage, die beim Auftreffen der von der Bestrahlungsvorrichtung emittierten Strahlung auf das Aufbaumaterial hervorgerufenen vorübergehenden oder dauerhaften Veränderungen einer Eigenschaft des Aufbaumaterials zu erfassen. Dadurch kann beispielsweise eine Eigenschaft des Schmelzbads, z.B. in Form von Messdaten, erfasst werden.

Des Weiteren beinhaltet die Prozessüberwachungsvorrichtung zumindest einen Sensor, der in der Lage ist, eine beim Auftreffen der von der Bestrahlungsvorrichtung emittierten Strahlung auf das Aufbaumaterial von letzterem emittierte (dies umfasst auch "reflektierte") Prozessstrahlung zu erfassen. Das von dem Sensor erfasste Schmelzbadsignal kann so beispielsweise an die Prozessüberwachungsvorrichtung weitergeleitet werden und mit weiteren Prozessinformationen, wie beispielsweise dem Bestrahlungstyp und/oder den entsprechenden Koordinaten ausgewertet und/oder gespeichert und/oder visualisiert werden.

Vorzugsweise sind die Prozessüberwachungsvorrichtung und die Steuereinrichtung mit einer gemeinsamen Datenbank verbunden. Damit kann die Prozessüberwachungsvorrichtung beispielsweis auf von der Steuereinrichtung bereitgestellte Daten zurückgreifen, wie beispielsweise den Start- und Endzeitpunkt des Bauvorganges. Ferner kann die Datenbank beispielsweise als Datenspeicher für bereitgestellte Daten dienen.

Ein erfindungsgemäßes Bestrahlungssteuerungsverfahren dient zur Anwendung in einer generativen Schichtbauvorrichtung zur Herstellung mindestens eines dreidimensionalen Objektes aus einem Aufbaumaterial Schicht für Schicht durch Verfestigung des Aufbaumaterials mittels Wärmezufuhr zu dem Querschnitt eines Objekts in einer Schicht entsprechenden Stellen indem die Schicht selektiv mit elektromagnetischer Strahlung oder Teilchenstrahlung abgetastet wird. Die generative Schichtbauvorrichtung weist dabei eine Bestrahlungsvorrichtung auf, die elektromagnetische Strahlung oder Teilchenstrahlung emittiert und in der Lage ist, in einer Schicht zu verfestigende Stellen so zu bestrahlen, dass sie nach Abkühlung als Objektquerschnitt oder Teil des Objektquerschnitts in der jeweiligen Schicht vorliegen und eine Bestrahlungssteuervorrichtung mit einer ersten Datenausgabeschnittstelle, an der Steuerbefehle an die Bestrahlungsvorrichtung ausgegeben werden können, damit diese entsprechend den Steuerbefehlen Stellen einer Schicht des Aufbaumaterials mit elektromagnetischer Strahlung oder Teilchenstrahlung abtastet. Dabei spezifizieren die Steuerbefehle, die über die erste Datenausgabeschnittstelle ausgeben werden, einen aus einer Mehrzahl von Bestrahlungstypen, wobei ein Bestrahlungstyp definiert ist durch eine vorgegebene Kombination aus einer von der Bestrahlungsvorrichtung zu emittierenden Strahlungsenergiedichte und einem Abtastmuster, mit dem die Strahlung auf einen Bereich einer Schicht des Aufbaumaterials gerichtet wird. Über eine zweite Datenausgabeschnittstelle gibt die Bestrahlungssteuervorrichtung einen Bestrahlungstyp in Echtzeit im Verhältnis zu einem zeitlichen Ablauf der Ausgabe eines diesen Bestrahlungstyp spezifizierenden Steuerbefehls aus.

Somit ist es beispielsweise möglich, den zur Bestrahlung eines Bereichs des Objektquerschnitts in der jeweiligen Schicht verwendeten Bestrahlungstyp mit einem begrenzten Zeitversatz zu dem ausgegebenen Steuerbefehl bereitzustellen.

Ein weiteres erfindungsgemäßes Verfahren dient der Herstellung mindestens eines dreidimensionalen Objekts mittels einer generativen Schichtbauvorrichtung, wobei in der generativen Schichtbauvorrichtung das mindestens eine Objekt Schicht für Schicht hergestellt wird durch Verfestigung eines Aufbaumaterials mittels Wärmezufuhr zu den dem Querschnitt eines Objekts in einer Schicht entsprechenden Stellen, indem die Schicht selektiv mit elektromagnetischer Strahlung oder Teilchenstrahlung abgetastet wird. Das Verfahren weist mindestens die folgenden Schritte auf:
- einen Auftragsschritt des Bereitstellens einer Schicht des Aufbaumaterials auf einer Bauunterlage oder einer bereits vorhandenen Schicht des Aufbaumaterials, und
- einen Verfestigungsschritt des Verfestigens der aufgetragenen Schicht mittels einer Bestrahlungsvorrichtung, die elektromagnetische Strahlung oder Teilchenstrahlung emittiert, durch Bestrahlen aller in einer Schicht zu verfestigenden Stellen dergestalt, dass sie nach Abkühlung als Objektquerschnitt oder Teil des Objektquerschnitts in der jeweiligen Schicht vorliegen.

Der Auftragsschritt und der Verfestigungsschritt werden dabei nacheinander so oft wiederholt, bis alle Querschnitte des mindestens einen herzustellenden dreidimensionalen Objekts verfestigt sind. Weiter umfasst das Verfahren einen Schritt des Zuführens von Steuerbefehlen aus dem oben beschriebenen erfindungsgemäßen Bestrahlungssteuerungsverfahren.

Mit diesem Verfahren kann beispielsweise ein dreidimensionales Objekt schichtweise hergestellt werden unter Erzielen der oben für das Bestrahlungssteuerungsverfahren aufgeführten Wirkungen.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts gemäß einer Ausführungsform der vorliegenden Erfindung.
- Fig. 2: ist ein schematisches Blockdiagramm, welches schematisch den Datenfluss in einer derartigen Vorrichtung zeigt.

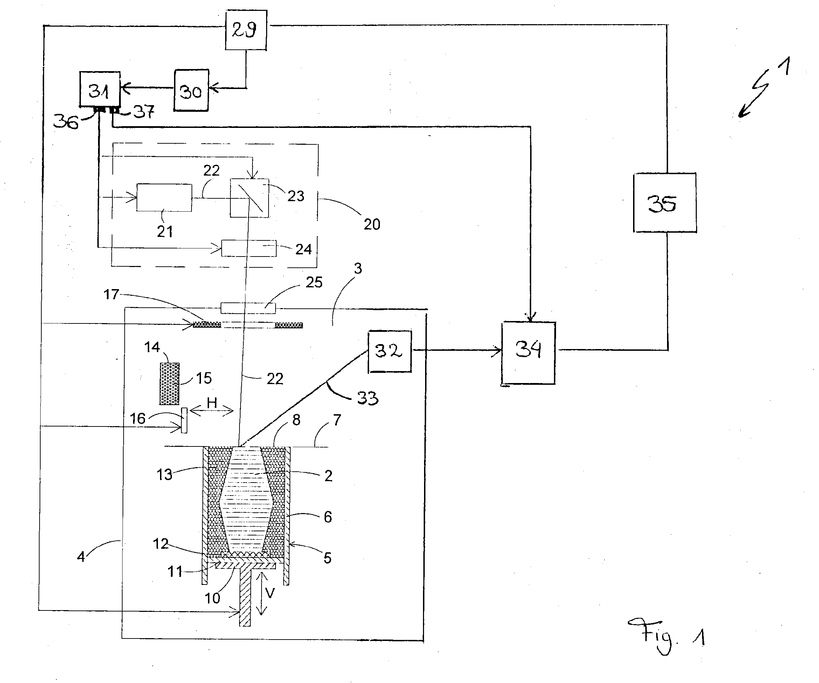

Im Folgenden wird mit Bezug auf Fig. 1 eine Ausführungsform der vorliegenden Erfindung beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares Aufbaumaterial 15 und einen in einer horizontalen Richtung H bewegbaren Beschichter 16 zum Aufbringen des Aufbaumaterials 15, vorzugsweise eines pulverförmigen Aufbaumaterials, innerhalb des Baufelds 8. Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Des Weiteren enthält die Lasersintervorrichtung einen Sensor 32, der dazu geeignet ist, eine Prozessstrahlung 33 zu erfassen, welche beim Auftreffen des Laserstrahls 22 auf das Aufbaumaterial 15 in der Arbeitsebene 7 emittiert wird. Der Sensor 32 steht in Verbindung mit einer Prozessüberwachungsvorrichtung 34. Der Sensor 32 kann dabei wie in Fig. 1 gezeigt in der Prozesskammer 3 angeordnet sein. Alternativ dazu ist es auch möglich, den Sensor 32 außerhalb der Prozesskammer 3 anzuordnen und die Prozessstrahlung 33 durch ein zweites Fenster auf den Sensor 32 auftreffen zu lassen.

Der Sensor 32 kann beispielsweise als optische Kamera oder als Fotodiode ausgeführt sein zum Erfassen einer von dem auftreffenden Laserstrahl 22 emittierten elektromagnetischen Strahlung, oder als Temperaturfühler zum Erfassen einer emittierten thermischen Strahlung. Ferner können auch mehrere Sensoren 32 in der Lasersintervorrichtung 1 vorgesehen sein zum Erfassen einer optischen und/oder thermischen Prozessstrahlung 33.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Belichtungsvorrichtung 20 wird dabei über eine Belichtungssteuervorrichtung 31 gesteuert, welche entsprechende Steuerbefehle von der Steuereinheit 29 erhält. Optional kann ein Puffer 30 zur Zwischenspeicherung der durch die Belichtungssteuervorrichtung 31 an die Belichtungsvorrichtung 20 zu übermittelnden Steuerbefehle zwischen der Steuereinheit 29 und der Belichtungssteuervorrichtung 31 vorgesehen sein. Die Belichtungssteuervorrichtung 31 weist eine erste Datenausgabeschnittstelle 36 auf, an der die Steuerbefehle an die Belichtungsvorrichtung 20 ausgegeben werden, sowie eine zweite Datenausgabeschnittstelle 37, an der weitere Daten an die Prozessüberwachungsvorrichtung 34 ausgegeben werden können.

Die Prozessüberwachungsvorrichtung 34 und die Steuereinheit 29 sind optional mit einer gemeinsamen Datenbank 35 elektronisch verbunden. Ferner kann die Lasersintervorrichtung 1 auch weitere, in Fig. 1 nicht gezeigte Komponenten zum Speichern und/oder Auswerten und/oder Visualisieren der Daten umfassen. Neben der ersten und zweiten Datenausgabeschnittstelle 36, 37 sind noch weitere Datenaus- und Dateneingabeschnittstellen vorgesehen, welche in Fig. 1 zur Vereinfachung der Darstellung jedoch nicht näher gezeigt sind.

Alternativ kann die Steuereinheit 29 und/oder der Puffer 30 und/oder die Belichtungssteuervorrichtung 31 und/oder die Prozessüberwachungsvorrichtung 34 und/oder die Datenbank 35 auch teilweise oder ganz außerhalb der Vorrichtung angebracht sein. Die Steuereinheit 29 und/oder die Belichtungssteuervorrichtung 31 und/oder die Prozessüberwachungsvorrichtung 34 kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit bzw. die Steuereinheiten geladen werden kann.

Zum Steuern der Belichtungsvorrichtung 20 gibt die Belichtungssteuervorrichtung 31 Steuerbefehle über die erste Datenausgabeschnittstelle 36 aus. Ein derartiger Steuerbefehl umfasst dabei für eine bestimmte Schicht des dreidimensionalen Objekts 2 die Koordinaten der zu verfestigenden Stellen dieser Schicht, d.h. des Objektquerschnitts in der Schicht, oder zumindest eines Teilbereichs des Objektquerschnitts. Die den Steuerbefehlen zugrunde liegenden Koordinaten werden typischerweise von einem Computerprogramm aus einem Computermodell (zum Beispiel einem CAD-Modell) des herzustellenden Objekts berechnet und liegen bereits vor Herstellung des Objekts vor. Weiter umfasst der Steuerbefehl den Belichtungstyp, mit welchem der den Koordinaten entsprechende Objektquerschnitt oder Teilbereich des Objektquerschnitts verfestigt werden soll. Ein Belichtungstyp ist hierbei zumindest durch ein bestimmtes Abtastmuster, mit dem der zu verfestigende Bereich durch den Laserstrahl 22 abzutasten ist, und die Strahlungsenergiedichte des Laserstrahls 22 definiert. Zudem kann ein Belichtungstyp noch den Strahldurchmesser und/oder die Gestalt des Strahlquerschnitts des Laserstrahls 22 spezifizieren.

Da die Schichtinformation bereits vor Herstellung des Objekts vorliegt, ist auch bekannt, aus welchen flächigen Teilbereichen sich die Objektquerschnitte der einzelnen Schichten zusammensetzen. Ein Teilbereich kann dabei beispielsweise ein Konturbereich, ein sogenannter Downskin-Bereich, ein sogenannter Upskin-Bereich, ein Innenbereich oder ein Support-Bereich sein. Ein Konturbereich entspricht einem Randbereich des Objekts und liegt damit an einer äußeren oder inneren Oberfläche des fertigen Objekts. Der Innenbereich entspricht der gesamten Querschnittsfläche abzüglich des Konturbereichs. Ein Downskin-Bereich liegt während der Herstellung unmittelbar oberhalb von unverfestigt gebliebenem Pulver, während ein Upskin-Bereich nach der Verfestigung und während des weiteren Herstellungsvorgangs unmittelbar von Pulver bedeckt ist, welches nicht verfestigt wird. Ein Support-Bereich ist ein Bereich, welcher einen Teil einer Stützstruktur für das herzustellende Objekt bildet. Da an die verschiedenen Teilbereiche unterschiedliche Anforderungen, beispielsweise hinsichtlich der erzielten Dichte, Porosität, Oberflächenqualität, Formgenauigkeit und/oder Belichtungsgeschwindigkeit gestellt werden, ist jedem Teilbereichstyp ein bestimmter Belichtungstyp zugeordnet und die Information darüber wie oben beschrieben in den Steuerbefehlen hinterlegt.

Im Betrieb der Lasersinter- oder Laserschmelzvorrichtung 1 wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage oder eine bereits vorher vorhandene Pulverschicht auf. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels einer Strahlungsheizung 17 auf eine Arbeitstemperatur aufgeheizt. Anschließend wird der Querschnitt des herzustellenden Objekts 2 von dem Laserstrahl 22 abgetastet, sodass das pulverförmige Aufbaumaterial 15 an den Stellen verfestigt wird, die dem Querschnitt des herzustellenden Objekts 2 entsprechen. Dabei werden die Pulverkörner an diesen Stellen durch die durch die Strahlung eingebrachte Energie teilweise oder vollständig aufgeschmolzen, so dass sie nach einer Abkühlung miteinander verbunden als Festkörper vorliegen. Das Abtasten des Objektquerschnitts des herzustellenden Objekts 2 erfolgt dabei wie oben beschrieben in einzelnen Teilbereichen, wobei jedem Teilbereichstyp ein Belichtungstyp zugeordnet ist. Der beim Auftreffen des Laserstrahls 22 auf die Pulveroberfläche entstehende Schmelzbad emittiert eine Prozessstrahlung 33, welche auf den Sensor 32 trifft und von diesem registriert wird.

Diese Schritte werden solange wiederholt, bis das Objekt 2 fertiggestellt ist und der Prozesskammer 3 entnommen werden kann.

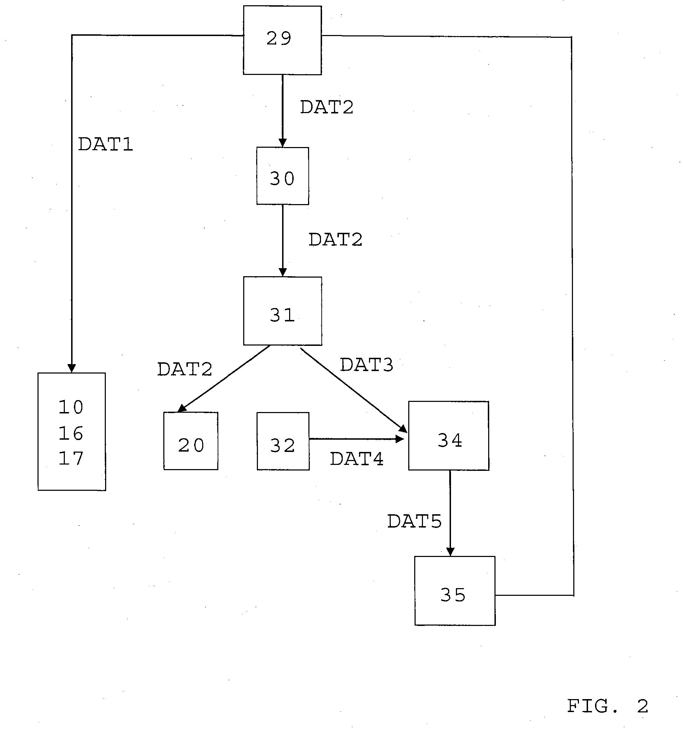

Fig. 2 zeigt ein Diagramm, das den Datenfluss im Betrieb der Lasersintervorrichtung 1 darstellt. Die Datenbank 35 übermittelt Steuerbefehle an die Steuereinrichtung 29. Diese steuert über einen ersten Datensatz DAT1 in koordinierter Weise die Schritte des Pulverauftrags, optionalen Aufheizens der Pulverschicht, und Absenken des Trägers 10. Ein zweiter Datensatz DAT2 enthält die Steuerbefehle für die Belichtungsvorrichtung 20, d.h. die Koordinaten der zu verfestigenden Teilbereiche der Querschnittsfläche in der jeweiligen Schicht, sowie den dem Teilbereich zugeordneten Belichtungstyp. Dieser zweite Datensatz DAT2 wird in einem Puffer 30 zwischengespeichert und von dort an die Belichtungssteuervorrichtung 31 übermittelt, so dass die Belichtungssteuervorrichtung unmittelbar nach Verarbeiten eines ersten Steuerbefehls und Ausführen des ersten Steuerbefehls durch die Belichtungsvorrichtung 20 auf einen zweiten Steuerbefehl zugreifen kann. Der Steuerbefehl wird dabei über die erste Datenausgabeschnittstelle an die Belichtungsvorrichtung 20 ausgegeben. Ein dritter Datensatz DAT3, wird von der Belichtungssteuervorrichtung 31 an die Prozessüberwachungsvorrichtung 34 über die zweite Datenausgabeschnittstelle ausgegeben, wobei die Ausgabe des dritten Datensatzes DAT3 in Echtzeit, d.h. innerhalb eines begrenzten Zeitintervalls, vorzugsweise zeitgleich, mit der Ausgabe des zweiten Datensatzes DAT2 an die Belichtungsvorrichtung 20 erfolgt. Der Datensatz DAT3 umfasst dabei den von dem Datensatz DAT2 spezifizierten Belichtungstyp, sowie die Koordinaten des zu belichtenden Teilbereichs. In der Prozessüberwachungsvorrichtung 34 wird der Datensatz DAT3 mit einem Datensatz DAT4, welcher das vom Sensor 32 registrierte Schmelzbadsignal umfasst, verknüpft. Dadurch wird einem Schmelzbadsignal sein Erfassungsort im Bauteil sowie die Information über den bei der Belichtung verwendeten Belichtungstyp zugeordnet. Diese verknüpfte Information wird in einem fünften Datensatz DAT5 in der Datenbank 35 hinterlegt. Der Datensatz DAT5 kann dann beispielsweise zu einer bauteilspezifischen Auswertung des Schmelzbadsignals unter Berücksichtigen der verschiedenen Belichtungstypen zur Ermittlung einer Bauteilqualität und/oder von Bauteileigenschaften verwendet werden. Ferner kann das ausgewertete Schmelzbadsignal über eine nicht gezeigte Visualisierungseinrichtung grafisch dargestellt werden.

Die in den Fig. 1 und 2 beschriebene Vorrichtung kann auch ohne einen Puffer zur Zwischenspeicherung von Daten ausgeführt sein. In diesem Fall werden die Steuerbefehle unmittelbar von der Steuereinheit an die Belichtungssteuervorrichtung ausgegeben. Ferner kann die Vorrichtung ohne eine gemeinsame Datenbank, mit welcher die Steuereinheit und die Prozessüberwachungsvorrichtung verbunden sind, ausgeführt sein. In diesem Fall kann die Prozessüberwachungsvorrichtung einen separaten Speicher zum Speichern des Datensatzes DAT5 aufweisen und/oder eine Visualisierungseinrichtung zum grafischen Darstellen der Daten.

Der von der Belichtungssteuervorrichtung über die zweite Datenausgabeschnittstelle ausgegebene dritte Datensatz DAT3 kann alternativ nur die Information über den verwendeten Belichtungstyp enthalten. Der Datensatz DAT5 umfasst dann lediglich das ermittelte Schmelzbadsignal in Verbindung mit dem dazugehörigen Belichtungstyp ohne Angabe der den Erfassungsort im Bauteil spezifizierenden Koordinaten. Über eine zeitliche Abfolge der gespeicherten Information kann diese dann bei Bedarf einem Erfassungsort im Bauteil zugeordnet werden.

Auch wenn in Fig. 1 nur ein einzelnes herzustellendes Objekt gezeigt ist, so ist es auch möglich, mehrere Objekte gleichzeitig in einem oder mehreren Behältern herzustellen. Dazu wird das Aufbaumaterial schichtweise an allen Stellen, die den Querschnitten der Objekte in der jeweiligen Schicht entsprechen, durch den Energiestrahl abgetastet.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials durch Abtasten mit einem Energiestrahl angewendet werden.

Der Belichter kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen.

Als Aufbaumaterial können verschiedene Materialien verwendet werden, vorzugsweise Pulver, insbesondere Metallpulver, Kunststoffpulver, Keramikpulver, Sand, gefüllte oder gemischte Pulver, oder auch pastöse Materialien.

## Patentansprüche

1. Bestrahlungssteuervorrichtung zur Aus- und/oder Nachrüstung einer generativen Schichtbauvorrichtung zur Herstellung mindestens eines dreidimensionalen Objektes (2) aus einem Aufbaumaterial Schicht für Schicht durch Verfestigung des Aufbaumaterials mittels Wärmezufuhr zu dem Querschnitt eines Objekts (2) in einer Schicht entsprechenden Stellen indem die Schicht selektiv mit elektromagnetischer Strahlung oder Teilchenstrahlung (22) abgetastet wird,
wobei die generative Schichtbauvorrichtung aufweist:
eine Bestrahlungsvorrichtung (20), die elektromagnetische Strahlung oder Teilchenstrahlung (22) emittiert und in der Lage ist, in einer Schicht zu verfestigende Stellen so zu bestrahlen, dass sie nach Abkühlung als Objektquerschnitt oder Teil des Objektquerschnitts in der jeweiligen Schicht vorliegen,
wobei die Bestrahlungssteuervorrichtung eine erste Datenausgabeschnittstelle (36) aufweist, an der Steuerbefehle an die Bestrahlungsvorrichtung (20) ausgegeben werden können, damit diese entsprechend den Steuerbefehlen Stellen einer Schicht des Aufbaumaterials mit elektromagnetischer Strahlung oder Teilchenstrahlung (22) abtastet,
**dadurch gekennzeichnet, dass** die Steuerbefehle, die über die erste Datenausgabeschnittstelle (36) ausgeben werden, einen aus einer Mehrzahl von Bestrahlungstypen spezifizieren, wobei ein Bestrahlungstyp definiert ist durch eine vorgegebene Kombination aus einer von der Bestrahlungsvorrichtung zu emittierenden Strahlungsenergiedichte und einem Abtastmuster, mit dem die Strahlung auf einen Bereich einer Schicht des Aufbaumaterials gerichtet wird und
die Bestrahlungssteuervorrichtung eine zweite Datenausgabeschnittstelle (37) aufweist, an der ein Bestrahlungstyp in Echtzeit im Verhältnis zu einem zeitlichen Ablauf der Ausgabe eines diesen Bestrahlungstyp spezifizierenden Steuerbefehls ausgegeben wird, wobei die Ausgabe des Bestrahlungstyps innerhalb einer vorgegebenen Zeitspanne vor oder nach der Ausgabe des zugehörigen Steuerbefehls erfolgt.

2. Bestrahlungssteuervorrichtung nach Anspruch 1, welche die Daten an der ersten und der zweiten Datenausgabeschnittstelle (36, 37) zeitgleich ausgeben kann.

3. Bestrahlungssteuervorrichtung nach Anspruch 1 oder 2, bei der im Betrieb der Zeitversatz zwischen der Ausgabe eines Bestrahlungstyps über die zweite Datenausgabeschnittstelle (37) und der Ausgabe eines diesen Bestrahlungstyp spezifizierenden Steuerbefehls über die erste Datenausgabeschnittstelle (36) stets unterhalb von 5 ms, bevorzugt 4 ms, besonders bevorzugt 3 ms, liegt.

4. Bestrahlungssteuervorrichtung nach einem der Ansprüche 1 bis 3, die weiterhin einen Puffer zur Speicherung von über die erste Datenausgabeschnittstelle (36) auszugebenden Steuerbefehlen aufweist.

5. Bestrahlungssteuervorrichtung nach einem der vorangehenden Ansprüche, bei der zeitlich koordiniert mit der Ausgabe eines die Koordinaten eines mit der Bestrahlungsvorrichtung zu bestrahlenden Ortes auf der Aufbaumaterialschicht spezifizierenden Steuerbefehls über die erste Datenausgabeschnittstelle (36) diese Koordinaten über die zweite Datenausgabeschnittstelle (37) ausgegeben werden.

6. Bestrahlungssteuervorrichtung nach Anspruch 5, bei der der Zeitversatz zwischen der Ausgabe der Koordinaten über die zweite Datenausgabeschnittstelle (37) und der Ausgabe eines die Koordinaten eines mit der Bestrahlungsvorrichtung zu bestrahlenden Ortes auf der Aufbaumaterialschicht spezifizierenden Steuerbefehls über die erste Datenausgabeschnittstelle (36) stets unterhalb von 5 ms, bevorzugt 4 ms, besonders bevorzugt 3 ms, liegt

7. Bestrahlungssteuervorrichtung nach einem der vorangehenden Ansprüche, bei der die Bestrahlungsvorrichtung mindestens einen Strahl mit einem definierten Durchmesser und/oder einer definierten Gestalt des Strahlquerschnitts und/oder einem definierten Intensitätsprofil emittiert und die Bestrahlungstypen desweiteren den Durchmesser und/oder die Gestalt des Strahlquerschnitts und/oder das Intensitätsprofil spezifizieren.

8. Generative Schichtbauvorrichtung zur Herstellung mindestens eines dreidimensionalen Objektes aus einem Aufbaumaterial Schicht für Schicht durch Verfestigung des Aufbaumaterials mittels Wärmezufuhr zu dem Querschnitt eines Objekts in einer Schicht entsprechenden Stellen, indem die Schicht selektiv mit elektromagnetischer Strahlung oder Teilchenstrahlung (22) abgetastet wird, wobei die Vorrichtung eine Bestrahlungssteuervorrichtung nach einem der Ansprüche 1 bis 7 aufweist sowie weiterhin aufweist:
eine Auftragsvorrichtung (14, 16) zum Aufbringen einer Schicht des Aufbaumaterials auf die Oberfläche einer Bauunterlage (11, 12) oder eine bereits vorhandene Schicht,
eine Bestrahlungsvorrichtung (20), die elektromagnetische Strahlung oder Teilchenstrahlung (22) emittiert und in der Lage ist, in einer Schicht zu verfestigenden Stellen so zu bestrahlen, dass sie nach Abkühlung als Objektquerschnitt oder Teil des Objektquerschnitts in der jeweiligen Schicht vorliegen, und
eine Steuereinrichtung (29), welche die Auftragsvorrichtung (14, 16) und die Bestrahlungsvorrichtung (20) so steuert, dass ein Auftragsschritt und ein Verfestigungsschritt nacheinander so oft wiederholt werden, bis alle Querschnitte des mindestens einen herzustellenden dreidimensionalen Objekts verfestigt sind.

9. Generative Schichtbauvorrichtung nach Anspruch 8, die so ausgelegt ist, dass die Steuereinrichtung (29) an die Bestrahlungssteuervorrichtung die von letzterer an die Bestrahlungsvorrichtung (20) ausgegebenen Steuerbefehle übermittelt.

10. Generative Schichtbauvorrichtung nach Anspruch 8 oder 9, weiterhin mit einer Prozessüberwachungsvorrichtung (34), die mit der zweiten Datenausgangsschnittstelle (37) verbunden ist.

11. Generative Schichtbauvorrichtung nach Anspruch 10, wobei die Prozessüberwachungsvorrichtung in der Lage ist, die beim Auftreffen der von der Bestrahlungsvorrichtung (20) emittierten Strahlung auf das Aufbaumaterial hervorgerufenen vorübergehenden oder dauerhaften Veränderungen einer Eigenschaft des Aufbaumaterials (15) zu erfassen.

12. Generative Schichtbauvorrichtung nach Anspruch 10 oder 11, wobei die Prozessüberwachungsvorrichtung (34) zumindest einen Sensor beinhaltet, der in der Lage ist, eine beim Auftreffen der von der Bestrahlungsvorrichtung (20) emittierten Strahlung auf das Aufbaumaterial von letzterem emittierte Prozessstrahlung zu erfassen.

13. Generative Schichtbauvorrichtung nach Anspruch 11 oder 12, wobei die Prozessüberwachungsvorrichtung (34) und die Steuereinrichtung (29) mit einer gemeinsamen Datenbank verbunden sind.

14. Bestrahlungssteuerungsverfahren zur Anwendung in einer generativen Schichtbauvorrichtung zur Herstellung mindestens eines dreidimensionalen Objektes (2) aus einem Aufbaumaterial Schicht für Schicht durch Verfestigung des Aufbaumaterials mittels Wärmezufuhr zu dem Querschnitt eines Objekts (2) in einer Schicht entsprechenden Stellen indem die Schicht selektiv mit elektromagnetischer Strahlung oder Teilchenstrahlung (22) abgetastet wird,
wobei die generative Schichtbauvorrichtung aufweist:
eine Bestrahlungsvorrichtung (20), die elektromagnetische Strahlung oder Teilchenstrahlung (22) emittiert und in der Lage ist, in einer Schicht zu verfestigende Stellen so zu bestrahlen, dass sie nach Abkühlung als Objektquerschnitt oder Teil des Objektquerschnitts in der jeweiligen Schicht vorliegen und
eine Bestrahlungssteuervorrichtung mit einer ersten Datenausgabeschnittstelle, an der Steuerbefehle an die Bestrahlungsvorrichtung (20) ausgegeben werden können, damit diese entsprechend den Steuerbefehlen Stellen einer Schicht des Aufbaumaterials mit elektromagnetischer Strahlung oder Teilchenstrahlung (22) abtastet,
**dadurch gekennzeichnet, dass** die Steuerbefehle, die über die erste Datenausgabeschnittstelle (36) ausgeben werden, einen aus einer Mehrzahl von Bestrahlungstypen spezifizieren, wobei ein Bestrahlungstyp definiert ist durch eine vorgegebene Kombination aus einer von der Bestrahlungsvorrichtung zu emittierenden Strahlungsenergiedichte und einem Abtastmuster, mit dem die Strahlung auf einen Bereich einer Schicht des Aufbaumaterials gerichtet wird und
die Bestrahlungssteuervorrichtung über eine zweite Datenausgabeschnittstelle (37) einen Bestrahlungstyp in Echtzeit im Verhältnis zu einem zeitlichen Ablauf der Ausgabe eines diesen Bestrahlungstyp spezifizierenden Steuerbefehls ausgibt, wobei die Ausgabe des Bestrahlungstyps innerhalb einer vorgegebenen Zeitspanne vor oder nach der Ausgabe des zugehörigen Steuerbefehls erfolgt.

15. Verfahren zur Herstellung mindestens eines dreidimensionalen Objekts (2) mittels einer generativen Schichtbauvorrichtung,
wobei in der generativen Schichtbauvorrichtung das mindestens eine Objekt (2) Schicht für Schicht hergestellt wird durch Verfestigung eines Aufbaumaterials mittels Wärmezufuhr zu den dem Querschnitt eines Objekts (2) in einer Schicht entsprechenden Stellen, indem die Schicht selektiv mit elektromagnetischer Strahlung oder Teilchenstrahlung (22) abgetastet wird und das Verfahren mindestens die folgenden Schritte aufweist:
einen Auftragsschritt des Bereitstellens einer Schicht des Aufbaumaterials auf einer Bauunterlage oder einer bereits vorhandenen Schicht des Aufbaumaterials,
einen Verfestigungsschritt des Verfestigens der aufgetragenen Schicht mittels einer Bestrahlungsvorrichtung (20), die elektromagnetische Strahlung oder Teilchenstrahlung (22) emittiert, durch Bestrahlen aller in einer Schicht zu verfestigenden Stellen dergestalt, dass sie nach Abkühlung als Objektquerschnitt oder Teil des Objektquerschnitts in der jeweiligen Schicht vorliegen,
wobei der Auftragsschritt und der Verfestigungsschritt nacheinander so oft wiederholt werden, bis alle Querschnitte des mindestens einen herzustellenden dreidimensionalen Objekts verfestigt sind,
**gekennzeichnet durch**
einen Schritt des Zuführens von den Steuerbefehlen aus dem Bestrahlungssteuerungsverfahren gemäß Anspruch 14.

## Claims

1. An exposure control device for equipping and/or retrofitting a generative layer-wise building device for a production of at least one three-dimensional object (2) from a building material layer by layer by solidification of the building material by means of a heat supply to positions corresponding to the cross-section of an object (2) in a layer by selectively scanning the layer with electromagnetic radiation or particle radiation (22),
wherein the generative layer-wise building device comprises:
an exposure device (20) which emits electromagnetic radiation (22) or particle radiation and is configured to irradiate positions to be solidified in a layer in such a way that after cooling they exist as an object cross-section or part of the object cross-section in the respective layer,
wherein the exposure control device has a first data output interface (36), at which control commands can be output to the exposure device (20) so that it scans, in accordance with the control commands, positions of a layer of the building material with electromagnetic radiation or particle radiation (22),
**characterized in that** the control commands which are output via the first data output interface (36) specify one of a plurality of exposure types wherein an exposure type is defined by a predetermined combination of a radiation energy density to be emitted by the exposure device and a scanning pattern with which the radiation is being directed to a region of a layer of the building material and
the exposure control device has a second data output interface (37) at which an exposure type can be output in real time in relation to a timing of the output of a control command specifying this exposure type, wherein the output of the exposure type takes place within a predetermined period of time before or after the output of the associated control command.

2. Exposure control device according to claim 1 which can output the data at the first and second data output interfaces (36, 37) at the same time.

3. Exposure control device according to claim 1 or 2 in which, during operation, the time offset between the output of an exposure type via the second data output interface (37) and the output of a control command specifying this exposure type via the first data output interface (36) is always less than 5 ms, preferably 4 ms, particularly preferred 3 ms.

4. Exposure control device according to one of claims 1 to 3 which further comprises a buffer for storing control commands to be output via the first data output interface (36).

5. Exposure control device according to one of the preceding claims wherein, with the output of a control command via the first data output interface (36), which control command specifies the coordinates of a location to be irradiated by the exposure device on the layer of building material, these coordinates are output in a temporally coordinated manner via the second data output interface (37).

6. Exposure control device according to claim 5, wherein the time offset between the output of the coordinates via the second data output interface (37) and the output of a control command specifying the coordinates of a location to be irradiated by the exposure device on the layer of building material via the first data output interface (36) is always below 5 ms, preferably 4 ms, particularly preferred 3 ms.

7. Exposure control device according to one of the preceding claims, wherein the exposure device emits at least one beam with a defined diameter and/or a defined shape of the cross-section of the beam and/or a defined intensity profile and the exposure types furthermore specify the diameter and/or the shape of the cross-section of the beam and/or the intensity profile.

8. A generative layer-wise building device for a production of at least one three-dimensional object from a building material layer by layer by solidification of the building material by means of a heat supply to positions corresponding to the cross-section of an object in a layer, by selectively scanning the layer with electromagnetic radiation or particle radiation (22), wherein the device comprises an exposure control device according to one of claims 1 to 7 and comprises further:
an application device (14, 16) for applying a layer of the building material on the surface of a building support (11, 12) or an already existing layer,
an exposure device (20) which emits electromagnetic radiation (22) or particle radiation and is configured to irradiate positions to be solidified in a layer in such a way that after cooling they exist as an object cross-section or part of the object cross-section in the respective layer and
a control device (29) which controls the application device (14, 16) and the exposure device (20) so that an application step and a solidification step are repeated successively until all cross-sections of the at least one three-dimensional object to be produced are solidified.

9. Generative layer-wise building device according to claim 8, which is configured such that the control device (29) transfers to the exposure control device the control commands outputted by the latter to the exposure device (20).

10. Generative layer-wise building device according to one of claims 8 or 9, further comprising a process monitoring device (34), which is connected to the second data output interface (37) .

11. Generative layer-wise building device according to claim 10, wherein the process monitoring device is capable of detecting the temporary or permanent changes of a property of the building material (15) that are generated when the radiation emitted by the exposure device is incident on the building material.

12. Generative layer-wise building device according to claim 10 or 11, wherein the process monitoring device (34) comprises at least one sensor which is capable of detecting a process radiation emitted by the building material upon the incidence of the radiation emitted by the exposure device (20) onto the building material.

13. Generative layer-wise building device according to claim 11 or 12, wherein the process monitoring device (34) and the control device (29) are connected to a common database.

14. A method of exposure control for application in a generative layer-wise building device for a production of at least one three-dimensional object (2) from a building material layer by layer by solidification of the building material by means of a heat supply to positions corresponding to the cross-section of an object (2) in a layer, by selectively scanning the layer with electromagnetic radiation or particle radiation (22),
wherein the generative layer-wise building device comprises:
an exposure device (20) which emits electromagnetic radiation (22)or particle radiation and is configured to irradiate positions to be solidified in a layer in such a way that after cooling they exist as an object cross-section or part of the object cross-section in the respective layer and
an exposure control device with a first data output interface, at which control commands can be output to the exposure device (20) so that it scans, in accordance with the control commands, positions of a layer of the building material with electromagnetic radiation or particle radiation (22),
**characterized in that** the control commands which are output via the first data output interface (36) specify one of a plurality of exposure types wherein an exposure type is defined by a predetermined combination of a radiation energy density to be emitted by the exposure device and a scanning pattern with which the radiation is being directed to a region of a layer of the building material and
wherein the exposure control device outputs via a second data output interface (37) an exposure type in real time in relation to a timing of the output of a control command specifying this exposure type, wherein the output of the exposure type takes place within a predetermined period of time before or after the output of the associated control command.

15. A method for the production of at least one three-dimensional object (2) by use of a generative layer-wise building device,
wherein in the generative layer-wise building device the at least one object (2) is produced layer by layer by solidification of a building material by means of a heat supply to the positions corresponding to the cross-section of an object (2) in a layer, by selectively scanning the layer with electromagnetic radiation or particle radiation (22) and wherein the method at least comprises the following steps:
an application step of providing a layer of the building material on a building support or an already existing layer of the building material, and
a solidification step of solidifying the applied layer by means of an exposure device (20), which emits electromagnetic radiation (22)or particle radiation, by irradiating all positions to be solidified in a layer in such a way, that after cooling they exist as an object cross-section or part of the object cross-section in the respective layer,
wherein the application step and the solidification step are repeated successively until all cross-sections of the at least one three-dimensional object to be produced are solidified,
**characterized by**
a step of supplying the control commands from the method of exposure control according to claim 14.

## Revendications

1. Dispositif de commande d'exposition à un rayonnement pour l'équipement et/ou le rééquipement d'un dispositif de construction additive par couches pour la fabrication d'au moins un objet (2) tridimensionnel à partir d'un matériau constitutif couche après couche par solidification du matériau constitutif au moyen d'apport de chaleur à la section transversale d'un objet (2) dans des endroits correspondant à une couche, du fait que la couche est balayée de manière sélective avec un rayonnement électromagnétique ou rayonnement particulaire (22),
dans lequel le dispositif de construction additive par couches présente :
un dispositif d'exposition à un rayonnement (20), qui émet un rayonnement électromagnétique ou rayonnement particulaire (22) et est en mesure d'exposer des endroits à solidifier dans une couche à un rayonnement, de sorte que, après refroidissement, ils sont présents dans la couche respective en tant que section transversale d'objet ou partie de la section transversale d'objet,
dans lequel le dispositif de commande d'exposition à un rayonnement présente une première interface de sortie de données (36), sur laquelle des instructions de commande peuvent être délivrées au dispositif d'exposition à un rayonnement (20), afin que celui-ci, de manière correspondante aux instructions de commande, balaye des endroits d'une couche du matériau constitutif avec un rayonnement électromagnétique ou rayonnement particulaire (22),
**caractérisé en ce que** les instructions de commande, qui sont délivrées par l'intermédiaire de la première interface de sortie de données (36), spécifient un parmi une pluralité de types d'exposition à un rayonnement, dans lequel un type d'exposition à un rayonnement est défini par une combinaison prédéfinie d'une densité d'énergie de rayonnement destinée à être émise par le dispositif d'exposition à un rayonnement et d'un modèle de balayage avec lequel le rayonnement est dirigé sur une zone d'une couche du matériau constitutif et
le dispositif d'exposition à un rayonnement présente une deuxième interface de sortie de données (37), sur laquelle un type d'exposition à un rayonnement est délivré en temps réel par rapport à un déroulement dans le temps de la délivrance d'une instruction de commande spécifiant ce type d'exposition à un rayonnement, dans lequel la délivrance du type d'exposition à un rayonnement s'effectue pendant un laps de temps prédéfini avant ou après la délivrance de l'instruction de commande correspondante.

2. Dispositif de commande d'exposition à un rayonnement selon la revendication 1, lequel peut délivrer simultanément les données à la première et à la deuxième interface de sortie de données (36, 37).

3. Dispositif de commande d'exposition à un rayonnement selon la revendication 1 ou 2, où, pendant le fonctionnement, le décalage temporel entre la délivrance d'un type d'exposition à un rayonnement par l'intermédiaire de la deuxième interface de sortie de données (37) et la délivrance d'une instruction de commande spécifiant ce type d'exposition à un rayonnement par l'intermédiaire de la première interface de sortie de données (36) se situe toujours au-dessous de 5 ms, de préférence 4 ms, de manière particulièrement préférée 3 ms.

4. Dispositif de commande d'exposition à un rayonnement selon l'une quelconque des revendications 1 à 3, qui présente en outre une mémoire tampon pour la mise en mémoire d'instructions de commande destinées à être délivrées par l'intermédiaire de la première interface de sortie de données (36).

5. Dispositif de commande d'exposition à un rayonnement selon l'une quelconque des revendications précédentes, où, de manière coordonnée dans le temps avec la délivrance d'une instruction de commande spécifiant les coordonnées d'un lieu destiné à être exposé à un rayonnement avec le dispositif d'exposition à un rayonnement sur le matériau constitutif par l'intermédiaire de la première interface de sortie de données (36), ces coordonnées sont délivrées par l'intermédiaire de la deuxième interface de sortie de données (37).

6. Dispositif de commande d'exposition à un rayonnement selon la revendication 5, où le décalage temporel entre la délivrance des coordonnées par l'intermédiaire de la deuxième interface de sortie de données (37) et la délivrance d'une instruction de commande spécifiant les coordonnées d'un lieu destiné à être exposé à un rayonnement avec le dispositif d'exposition à un rayonnement sur le matériau constitutif par l'intermédiaire de la première interface de sortie de données (36) se situe toujours au-dessous de 5 ms, de préférence 4 ms, de manière particulièrement préférée 3 ms.

7. Dispositif de commande d'exposition à un rayonnement selon l'une quelconque des revendications précédentes, où le dispositif d'exposition à un rayonnement émet au moins un faisceau avec un diamètre défini et/ou une forme définie de la section transversale de faisceau et/ou un profil d'intensité défini et les types d'exposition à un rayonnement spécifient en outre le diamètre et/ou la forme de la section transversale de faisceau et/ou le profil d'intensité.

8. Dispositif de construction additive par couches pour la fabrication d'au moins un objet tridimensionnel à partir d'un matériau constitutif couche après couche par solidification du matériau constitutif au moyen d'apport de chaleur à la section transversale d'un objet dans des endroits correspondant à une couche, du fait que la couche est balayée de manière sélective avec un rayonnement électromagnétique ou rayonnement particulaire (22), dans lequel le dispositif présente un dispositif de commande d'exposition à un rayonnement selon l'une quelconque des revendications 1 à 7 et présente en outre :
un dispositif d'application (14, 16) destiné à appliquer une couche du matériau constitutif sur la surface d'une base de construction (11, 12) ou une couche déjà présente,
un dispositif d'exposition à un rayonnement (20), qui émet un rayonnement électromagnétique ou rayonnement particulaire (22) et est en mesure d'exposer des endroits à solidifier dans une couche de sorte que, après refroidissement, ils sont présents dans la couche respective en tant que section transversale d'objet ou partie de la section transversale d'objet, et
un dispositif de commande (29), lequel commande le dispositif d'application (14, 16) et le dispositif d'exposition à un rayonnement (20) de sorte qu'une étape d'application et une étape de solidification sont répétées successivement jusqu'à ce que toutes les sections transversales de l'au moins un objet tridimensionnel à fabriquer soient solidifiées.

9. Dispositif de construction additive par couches selon la revendication 8, qui est conçu de sorte que le dispositif de commande (29) transmet au dispositif de commande d'exposition à un rayonnement les instructions de commande délivrées par ce dernier au dispositif d'exposition à un rayonnement (20).

10. Dispositif de construction additive par couches selon la revendication 8 ou 9, en outre avec un dispositif de surveillance de processus (34), qui est relié à la deuxième interface de sortie de données (37).

11. Dispositif de construction additive par couches selon la revendication 10, dans lequel le dispositif de surveillance de processus est en mesure de détecter des modifications temporaires ou durables d'une propriété du matériau constitutif (15) engendrées lorsque le rayonnement émis par le dispositif d'exposition à un rayonnement (20) vient frapper le matériau constitutif.

12. Dispositif de construction additive par couches selon la revendication 10 ou 11, dans lequel le dispositif de surveillance de processus (34) comporte au moins un capteur, qui est en mesure de détecter un rayonnement de processus émis, lorsque le rayonnement émis par le dispositif d'exposition à un rayonnement (20) vient frapper le matériau constitutif, par ce dernier.

13. Dispositif de construction additive par couches selon la revendication 11 ou 12, dans lequel le dispositif de surveillance de processus (34) et le dispositif de commande (29) sont reliés à une base de données commune.

14. Procédé de commande d'exposition à un rayonnement destiné à être appliqué dans un dispositif de construction additive par couches pour la fabrication d'au moins un objet (2) tridimensionnel à partir d'un matériau constitutif couche après couche par solidification du matériau constitutif au moyen d'apport de chaleur à la section transversale d'un objet (2) dans des endroits correspondant à une couche, du fait que la couche est balayée de manière sélective avec un rayonnement électromagnétique ou rayonnement particulaire (22),
dans lequel le dispositif de construction additive par couches présente :
un dispositif d'exposition à un rayonnement (20), qui émet un rayonnement électromagnétique ou rayonnement particulaire (22) et est en mesure d'exposer des endroits à solidifier dans une couche de sorte que, après refroidissement, ils sont présents dans la couche respective en tant que section transversale d'objet ou partie de la section transversale d'objet et
un dispositif de commande d'exposition à un rayonnement avec une première interface de sortie de données, sur laquelle des instructions de commande peuvent être délivrées au dispositif d'exposition à un rayonnement (20), afin que celui-ci, de manière correspondante aux instructions de commande, balaye des endroits d'une couche du matériau constitutif avec un rayonnement électromagnétique ou rayonnement particulaire (22),
**caractérisé en ce que** les instructions de commande, qui sont délivrées par l'intermédiaire de la première interface de sortie de données (36), spécifient un parmi une pluralité de types d'exposition à un rayonnement, dans lequel un type d'exposition à un rayonnement est défini par une combinaison prédéfinie d'une densité d'énergie de rayonnement destinée à être émise par le dispositif d'exposition à un rayonnement et un modèle de balayage avec lequel le rayonnement est dirigé sur une zone d'une couche du matériau constitutif et
le dispositif d'exposition à un rayonnement délivre par l'intermédiaire d'une deuxième interface de sortie de données (37) un type d'exposition à un rayonnement en temps réel par rapport à un déroulement dans le temps de la délivrance d'une instruction de commande spécifiant ce type d'exposition à un rayonnement, dans lequel la délivrance du type d'exposition à un rayonnement s'effectue pendant un laps de temps prédéfini avant ou après la délivrance de l'instruction de commande correspondante.

15. Procédé de fabrication d'au moins un objet (2) tridimensionnel au moyen d'un dispositif de construction additive par couches,
dans lequel, dans le dispositif de construction additive par couches, l'au moins un objet (2) est fabriqué couche après couche par solidification d'un matériau constitutif au moyen d'apport de chaleur aux endroits correspondant à la section transversale d'un objet (2) dans une couche, du fait que la couche est balayée de manière sélective avec un rayonnement électromagnétique ou rayonnement particulaire (22) et le procédé présente au moins les étapes suivantes :
une étape d'application consistant à fournir une couche du matériau constitutif sur une base de construction ou une couche, déjà présente, du matériau constitutif,
une étape de solidification consistant à solidifier la couche appliquée au moyen d'un dispositif d'exposition à un rayonnement (20), qui émet un rayonnement électromagnétique ou rayonnement particulaire (22), par exposition à un rayonnement de tous les endroits à solidifier dans une couche, de sorte que, après refroidissement, ils sont présents dans la couche respective en tant que section transversale d'objet ou partie de la section transversale d'objet,
dans lequel l'étape d'application et l'étape de solidification sont répétées successivement jusqu'à ce que toutes les sections transversales de l'au moins un objet tridimensionnel à fabriquer soient solidifiées,
**caractérisé par**
une étape d'amenée des instructions de commande provenant du procédé de commande d'exposition à un rayonnement selon la revendication 14.
